# DEMANDE DE BREVET EUROPEEN

(11) **EP 2 154 876 A1**
(43) Date de publication de la demande: **17.02.2010**
(21) Numéro de dépôt: 09165096.0
(22) Date de dépôt: 09.07.2009
(51) Int. Cl.: H04M 3/533, H04M 3/537

(54) **Procédé d'accès d'un terminal à au moins un message vocal déposé dans un serveur de messagerie, serveur de messagerie vocal et terminal associés**

(30) Priorité: 11.08.2008 FR 0855507
(71) Demandeur: FRANCE TELECOM, 75015 Paris (FR)
(72) Inventeur: Gue, Emmanuel, 14790 Verson (FR); Nedellec, Alexandra, 22300 Lannion (FR)

(57) **Abrégé**

L'invention concerne un procédé d'accès d'un terminal (2) à au moins un message vocal déposé dans un serveur de messagerie (1). Un tel procédé comprend les étapes suivantes:
- une étape d'envoi au terminal d'une notification de réception (Nr) dudit message vocal déposé, ladite notification contenant des informations relatives à ce dernier,
- une étape d'envoi par le terminal d'une requête (REM) en écoute dudit message vocal déposé auprès du serveur de messagerie,
le procédé étant **caractérisé en ce qu**'il comprend les étapes suivantes:
- préalablement à l'envoi de ladite requête en écoute du message vocal, au niveau du terminal:
* détermination d'un identifiant (IDter) dudit message vocal à partir d'au moins certaines desdites informations contenues dans la notification,
* introduction dudit identifiant déterminé dans ladite requête en écoute de message vocal ;

- suite à l'étape d'envoi par le terminal de ladite requête en écoute de message vocal, au niveau du serveur de messagerie:
* comparaison dudit identifiant reçu à un identifiant (IDserv) qui a été déterminé préalablement à partir desdites certaines informations contenues dans la notification,
* récupération du contenu du message vocal associé audit identifiant déterminé, en cas d'égalité entre les deux identifiants,
* transmission au terminal du contenu (MVn) dudit message vocal récupéré.

## Description

### Arrière-plan de l'invention

Le domaine de l'invention se rapporte au domaine de la messagerie vocale.

Actuellement, la plupart des opérateurs mobiles ou fixes proposent à leurs abonnés un service de messagerie vocale. Lorsqu'un utilisateur disposant de ce service n'est pas joignable, le correspondant appelant a la possibilité d'enregistrer un message vocal dans une boîte de réception vocale de l'utilisateur abonné. Ensuite, ce service de messagerie notifie à l'utilisateur l'existence d'un nouveau message dans sa boîte vocale.

Un tel service de notification est connu sous le nom de MWI (de l'anglais "Message Waiting Indicator"). Il permet de présenter au terminal la notification de la réception d'un nouveau message vocal sous différentes formes, notamment sous forme textuelle, vocale, sonore ou visuelle, la notification comprenant en outre des informations relatives au message vocal reçu, telles que la date et l'heure du dépôt de ce dernier, le numéro d'abonné du correspondant appelant, le nom de ce dernier, etc...

Dans le cas d'une notification visuelle sur un terminal de l'utilisateur qui est par exemple un téléphone fixe, le terminal donne une information visuelle pour indiquer l'existence d'un ou de plusieurs messages vocaux dans la boîte de réception vocale de dernier, par exemple par clignotement d'une diode électroluminescente prévue à cette effet. Pour consulter sa messagerie vocale, l'utilisateur accède à un serveur de messagerie vocal au moyen de son terminal, ce qui lui permet d'écouter l'ensemble de ses messages vocaux de façon séquentielle et dans l'ordre chronologique ou inversement chronologique de leur dépôt. Autrement dit, l'utilisateur doit nécessairement accéder au premier message avant de pouvoir accéder au second, et ainsi de suite jusqu'au dernier message déposé. Ainsi, l'utilisateur n'a pas la possibilité de sélectionner le message vocal qu'il souhaite écouter en particulier, ce qui rend l'utilisation de la messagerie vocale peu conviviale, peu pratique et consommatrice de temps.

Dans le cas d'une notification visuelle sur un terminal mobile ou un ordinateur de l'utilisateur, ce dernier a la possibilité de piloter les messages vocaux reçus grâce à une interface visuelle affichée sur l'écran du terminal mobile ou de l'ordinateur. Un tel pilotage consiste par exemple en la sélection d'un message vocal particulier dans la liste des messages vocaux reçus, puis en l'écoute de ce message. A cet effet, le serveur de messagerie vocal indexe l'ensemble des messages vocaux reçus et attribue à chaque message indexé un identifiant unique.

En règle générale, un tel service de messagerie visuelle nécessite, pour chaque message vocal déposé, la transmission de l'identifiant attribué du serveur de messagerie vers le terminal mobile ou l'ordinateur de l'utilisateur, ce qui entraîne la multiplication d'échanges entre le serveur de messagerie vocal et le terminal mobile ou l'ordinateur, et donc l'encombrement du réseau de l'opérateur. En outre, une telle transmission est obligatoirement sécurisée, ce qui nécessite la mise en place de mécanismes cryptographiques assez complexes et qui de ce fait rend le service de notification visuelle relativement contraignant. Enfin, un tel service est limité à certains types de terminaux, ce qui en réduit l'intérêt.

### Objet et résumé de l'invention

Un des buts de l'invention est de remédier à des inconvénients de l'état de la technique précité.

A cet effet, un objet de la présente invention concerne un procédé d'accès d'un terminal à au moins un message vocal déposé dans un serveur de messagerie, le procédé comprenant :
- une étape d'envoi au terminal d'une notification de réception du message vocal déposé, la notification contenant des informations relatives à ce dernier,
- une étape d'envoi par le terminal d'une requête en écoute du message vocal déposé auprès du serveur de messagerie,
le procédé étant **caractérisé en ce qu**'il comprend les étapes suivantes:
- préalablement à l'envoi de la requête en écoute du message vocal, au niveau du terminal:
   * détermination d'un identifiant du message vocal à partir d'au moins certaines des informations contenues dans la notification,
   * introduction de l'identifiant déterminé dans la requête en écoute de message vocal ;
- suite à l'étape d'envoi par le terminal de la requête en écoute de message vocal, au niveau du serveur de messagerie:
   * comparaison de l'identifiant reçu à un identifiant qui a été déterminé préalablement à partir desdites certaines informations contenues dans la notification,
   * récupération du contenu du message vocal associé à l'identifiant déterminé, en cas d'égalité entre les deux identifiants,
   * transmission au terminal du contenu du message vocal récupéré.

Une telle disposition permet ainsi à l'utilisateur d'un terminal d'un type quelconque de sélectionner un message vocal parmi d'autres afin de l'écouter indépendamment des autres, sans qu'aucune information d'identification de ce message ne soit échangée entre le terminal et le serveur de messagerie.

Dans un mode de réalisation, l'étape de détermination des identifiants est effectuée au moyen d'une fonction mathématique bijective connue à la fois du terminal et du serveur de messagerie.

Une telle disposition permet au terminal de deviner l'identifiant d'un message vocal sélectionné, d'une façon rapide et simple à mettre en oeuvre, avec la certitude pour l'utilisateur que l'identifiant est obtenu de manière unique.

Dans un autre mode de réalisation, lesdites certaines informations contenues dans la notification comprennent une indication temporelle sur le dépôt du message vocal.

Une telle disposition permet ainsi, pour un message vocal sélectionné, d'exploiter les informations contenues dans la notification MWI associée, en vue du calcul de l'identifiant dudit message vocal.

En variante, lesdites certaines informations contenues dans la notification comprennent une indication sur l'identification de l'expéditeur du message vocal déposé.

Dans encore un autre mode de réalisation, le terminal est du type domestique et la notification de réception de message vocal est du type visuelle.

Une telle disposition permet ainsi à un téléphone fixe de pouvoir bénéficier, au même titre qu'un terminal mobile ou qu'un ordinateur, d'une interface de notification visuelle de réception de messages vocaux, afin de retrouver de façon dynamique et autonome les informations relatives à un message vocal stocké sur le serveur de messagerie, sans que ce dernier n'ait à lui transmettre.

Corrélativement, un autre objet de l'invention concerne un serveur de messagerie comprenant:
- des moyens de réception d'au moins un message vocal,
- des moyens d'émission pour envoyer à un terminal une notification de réception du message vocal reçu, la notification contenant des informations relatives au message vocal,
- des moyens de réception d'une requête en écoute du message vocal, en provenance du terminal,
le serveur étant **caractérisé en ce qu**'il comprend en outre:
- des moyens de calcul pour déterminer un identifiant du message vocal reçu, à partir de certaines des informations contenues dans la notification,
- des moyens de traitement pour comparer l'identifiant déterminé à un identifiant contenu dans la requête en écoute de message vocal reçue,
- des moyens de récupération du contenu du message vocal associé à l'identifiant déterminé, en cas d'égalité entre les deux identifiants,
- des moyens de transmission au terminal du contenu du message vocal récupéré.

Un autre objet de l'invention concerne également un terminal comprenant :
- des moyens de réception d'une notification de réception de message vocal, la notification comprenant des informations relatives au message vocal,
- des moyens d'émission pour envoyer une requête en écoute du message vocal auprès d'un serveur de messagerie,
le terminal étant **caractérisé en ce qu**'il comprend:
- des moyens de calcul pour déterminer un identifiant du message vocal à partir de certaines des informations contenues dans la notification ;
- des moyens d'introduction de l'identifiant déterminé dans la requête en écoute de message vocal.

Encore un autre objet de l'invention concerne un système d'accès à au moins un message vocal déposé dans un serveur de messagerie tel que mentionné ci-dessus, à partir d'un terminal tel que mentionné ci-dessus.

Encore un autre objet de l'invention concerne un programme d'ordinateur comportant des instructions pour l'exécution des étapes du procédé d'accès tel que mentionné ci-dessus, lorsque le programme est exécuté par un ordinateur.

Un tel programme comporte également des instructions pour l'exécution des étapes complémentaires du procédé d'accès tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Encore un autre objet de l'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une représentation de l'architecture générale dans laquelle est mis en oeuvre le procédé d'accès à au moins un message vocal selon l'invention;
- la figure 2 représente un ordinogramme d'un procédé d'accès à au moins un message vocal conforme à l'invention.

### Description détaillée d'un mode de réalisation

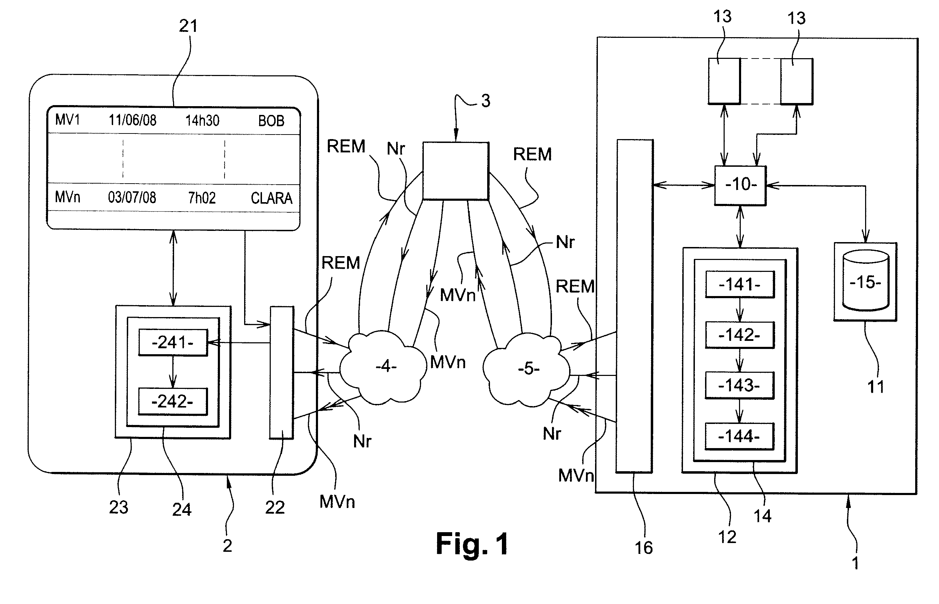

La **figure 1** représente de façon générale le système d'accès à au moins un message vocal, dans lequel est mis en oeuvre le procédé de d'accès selon l'invention.

Le système d'accès, représenté sur la figure 1, comprend :
- un serveur de messagerie vocal 1,
- un terminal 2, de préférence de type domestique fixe, qui est adapté à recevoir en provenance du serveur 1 les contenus audio des messages vocaux déposés dans ce dernier,
- une passerelle domestique 3 apte à transmettre lesdits contenus au terminal domestique 2,
- un réseau domestique 4 dans lequel sont connectés le terminal 2 et la passerelle 3, par exemple de type WiFi,
- un réseau de communication de type Internet 5 dans lequel sont connectés d'une part, la passerelle domestique 3, et, d'autre part, le serveur de messagerie vocal 1.

Le serveur de messagerie vocal 1, illustré en **figure 1****,** a, de façon connue en soi, l'architecture matérielle d'un ordinateur et comprend de ce fait un processeur 10, une mémoire vive 11 et une mémoire morte 12.

Un tel serveur 1 comporte en particulier:
- un ensemble de boîtes de réception de messages 13,
- une unité de traitement 14, telle qu'un logiciel stocké dans la mémoire morte 12, qui est apte à gérer les messages vocaux enregistrés dans les boîtes de réception 13,
- un module de stockage 15, tel qu'une base de données stockée dans la mémoire vive 11, qui est apte à mémoriser, pour chaque message vocal déposé dans l'une des boîtes de réception 13, certaines informations relatives au message vocal en association avec un identifiant IDserv du message préalablement calculé,
- et un module 16 de communication avec la passerelle 3, tel que par exemple une interface de type Internet.

Chaque boîte de réception 13 est dédiée à un utilisateur abonné particulier et est identifiée par exemple par le numéro de téléphone de l'utilisateur abonné.

Plus précisément, l'unité de traitement 14 comprend:
- un premier module de calcul 141 apte à déterminer un identifiant unique IDserv pour chaque vocal déposé dans l'une des boîtes de réception 13,
- un premier module applicatif 142 apte à être lancé dès qu'un identifiant a été calculé, afin d'associer ce dernier à certaines informations du message vocal correspondant,
- un second module de calcul 143 apte à comparer, pour chaque message vocal déposé, un identifiant IDserv du message préalablement calculé à un identifiant IDter reçu en provenance du terminal 2,
- un second module applicatif 144 apte à être lancé en cas d'égalité entre les deux identifiants précités, de façon à extraire dans la base de données 15 le contenu audio du message vocal associé à l'identifiant IDserv.

Dans l'exemple représenté, le premier module de calcul 141 détermine l'identifiant IDserv d'un message vocal MVn déposé à partir d'une fonction mathématique bijective prédéterminée dont les paramètres sont constitués par certaines des informations relatives au message vocal MVn. Il s'agit de préférence d'informations numériques qui comprennent, par exemple une indication temporelle sur le dépôt du message vocal MVn, en particulier la date et l'heure de dépôt.

La fonction bijective précitée s'exprime par exemple de la façon suivante:
F(x)=2x où x est l'indication temporelle sur le dépôt du message vocal MVn, à savoir la date et l'heure du dépôt.

Dans l'exemple représenté, le message vocal MVn a été envoyé par Clara, le 3 juillet 2008, et déposé à 7h02 dans la boîte de réception 13 de l'utilisateur du terminal 2.

Si on pose x=0307080702 avec par exemple la date représentée sur six chiffres et l'heure représentée sur quatre chiffres, le module de calcul 141 détermine IDserv= F(x)=2x0307080702=61416140.

En variante, x est l'identification de l'utilisateur expéditeur, en particulier, le numéro téléphonique de ce dernier. Si on suppose que le numéro de téléphone de Clara est le 0600000000, on pose x=0600000000 et le module de calcul 141 détermine IDserv=F(x)=2x0600000000=1,2 x10⁸_{.}

Toujours en référence à la **figure 1****,** le terminal domestique 2 est de préférence de type audio. Il s'agit par exemple d'un téléphone WiFi-SIP (de l'anglais Session Initiation Protocol), d'un médiaphone, d'un terminal pourvu d'un écran de plusieurs pouces de type cadre photo communiquant, etc.....

Un tel terminal 2 comprend, de façon connue en soi :
- une interface utilisateur 21 comprenant classiquement un clavier, un écran et un haut parleur,
- un module de communication 22 avec le serveur de messagerie vocal 1, par exemple de type WiFi,
- une mémoire morte 23 comprenant une unité de traitement 24, telle qu'un logiciel apte à gérer les notifications de réception de messages vocaux transmis par le serveur de messagerie vocal 1.

Plus précisément, l'unité de traitement 24 comprend:
- un module applicatif 241 apte à extraire d'une notification de réception d'un message vocal MVn transmise par le serveur de messagerie vocal 1, les informations précitées relatives à ce message vocal, et à les transmettre à l'interface 21 de façon à être visualisées par l'utilisateur sur l'écran du terminal 2,
- un module de calcul 242 apte à déterminer un identifiant unique IDter pour chaque message vocal déposé dans l'une des boîtes de réception 13, en particulier pour le message vocal MVn précité.

Dans l'exemple représenté, le module de calcul 242 détermine l'identifiant IDter du message vocal MVn à partir de la même fonction mathématique bijective prédéterminée que celle utilisée par le serveur de messagerie vocal 1 et en utilisant les mêmes paramètres que cette dernière.

Dans l'exemple représenté, l'utilisateur du terminal 2 peut visualiser sur l'écran de ce dernier que le message vocal MVn a été envoyé par Clara, le 3 juillet 2008, et déposé dans sa boîte de réception 13 à 7h02.

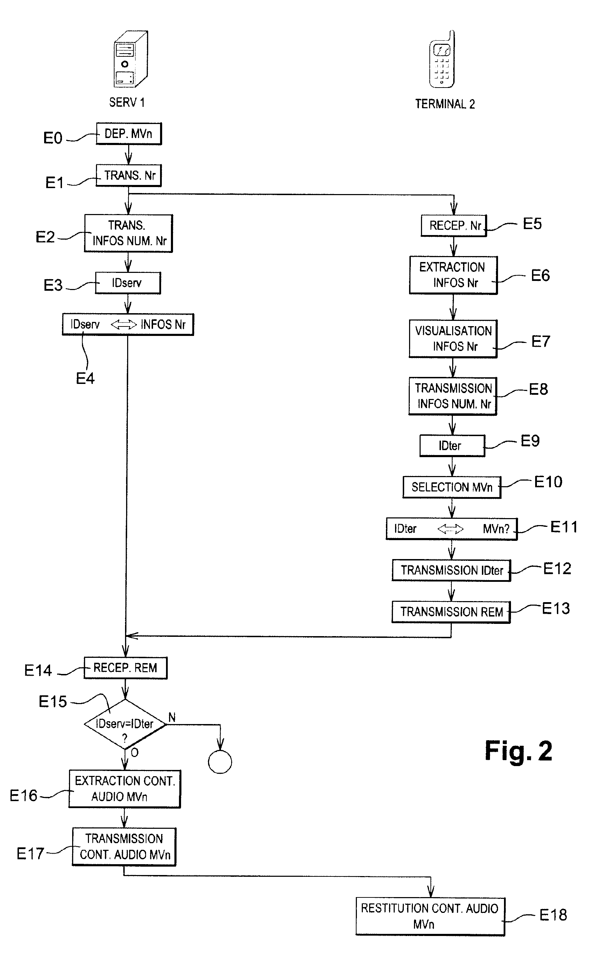

En référence maintenant aux **figures 1** **et** **2****,** on va décrire les principales étapes du procédé d'accès à au moins un message vocal conforme à l'invention.

Lorsque l'utilisateur du terminal domestique 2 n'est pas joignable, au cours d'une étape E0, un message vocal MVn est enregistré par un utilisateur expéditeur dans une boîte de réception 13 appartenant à l'utilisateur du terminal 2.

Au cours d'une étape E1, le module de communication 16 du serveur 1 transmet au terminal domestique 2, via les réseaux 5 et 4, une notification Nr de réception du message vocal MVn qui, de façon connue en soi, contient des informations du type:
- date de dépôt du message vocal MVn,
- heure de dépôt du message vocal Mvn,
- nom de l'utilisateur expéditeur,
- n° d'abonné de l'utilisateur expéditeur.

Au cours d'une étape E2, le module de communication 16 transmet au premier module de calcul 141 du serveur 1 certaines des informations qui sont contenues dans la notification Nr et qui sont de préférence uniquement de type numérique, à savoir, dans l'exemple représenté, la date et l'heure de dépôt du message vocal MVn.

L'étape E2 peut être effectuée à la suite de l'étape E1 ou simultanément à cette dernière.

Au cours d'une étape E3, le premier module de calcul 141 calcule un identifiant unique IDserv au moyen de la fonction bijective précitée dont les paramètres sont constitués par les informations numériques précitées.

Au cours d'une étape E4, le premier module applicatif 142 du serveur 1 enregistre, dans la base de données 15, l'identifiant IDserv qui vient d'être calculé en association avec l'ensemble des informations précitées contenues dans le message vocal MVn.

Au cours d'une étape E5, le module de communication 22 du terminal domestique 2 reçoit la notification Nr et la transmet à l'unité de traitement 24.

Dans l'exemple représenté, l'étape E5 est effectuée parallèlement aux étapes E2 à E4.

Au cours d'une étape E6, le module applicatif 241 de l'unité de traitement 24 extrait de la notification Nr, les informations suivantes:
- date de dépôt du message vocal MVn,
- heure de dépôt du message vocal Mvn,
- nom de l'utilisateur expéditeur,
- n° d'abonné de l'utilisateur expéditeur.

Au cours d'une étape E7, le module applicatif 241 transmet les informations extraites à l'interface 21 du terminal 2 pour être visualisées comme représenté en **figure 1****.**

Au cours d'une étape E8, le module applicatif 241 transmet au module de calcul 242 les mêmes informations que celles transmises à l'étape E2 précitée, à savoir, la date et l'heure de dépôt du message vocal MVn.

L'étape E8 peut être effectuée à la suite de l'étape E7 ou simultanément à cette dernière.

Au cours d'une étape E9, le module de calcul 242 de l'unité de traitement 24 calcule un identifiant unique IDter au moyen de la fonction bijective précitée dont les paramètres d'entrée sont la date et l'heure du dépôt du message vocal MVn.

Au cours d'une étape E10, l'utilisateur du terminal domestique 2 sélectionne le message vocal MVn sur l'interface 21 afin de l'écouter.

Au cours d'une étape E11, l'interface 21 adresse une requête au module de calcul 242 pour obtenir l'identifiant IDter associé au message vocal MVn sélectionné.

Au cours d'une étape E12, suite à l'obtention de l'identifiant IDter fourni par le module de calcul 242, l'interface 21 retransmet cet identifiant au module de communication 22 du terminal domestique 2.

Au cours d'une étape E13, le module de communication 22 transmet au serveur de messagerie vocal 1, via les réseaux 4 et 5, une requête REM en écoute du message vocal MVn, ladite requête contenant l'identifiant IDter calculé.

Au cours d'une étape E14, suite à la réception de la requête en écoute de message REM, le module de communication 16 du serveur 1 transmet cette dernière au second module de calcul 143 du serveur 1.

Au cours d'une étape E15, le second module de calcul 143 effectue une comparaison de l'identifiant IDter contenu dans la requête REM reçue avec l'identifiant IDserv calculé à l'étape E3 précitée.

Dans le cas où les deux identifiants sont égaux, au cours d'une étape E16, le second module applicatif 144 extrait de la base de données 15 le contenu audio du message vocal MVn associé à l'identifiant IDserv et transmet le contenu audio au module de communication 16.

Dans le cas où les deux identifiants ne sont pas égaux, il est mis fin au procédé d'accès, par exemple par l'envoi d'un message d'erreur au terminal domestique 2 lui signalant que l'accès au contenu audio du message vocal MVn n'est pas possible.

Au cours d'une étape E17, le module de communication 16 retransmet le contenu audio du message vocal MVn au terminal domestique 2, via les réseaux 5 et 4.

Au cours d'une étape E18, le terminal domestique 2 restitue le contenu audio du message vocal MVn via le haut-parleur de l'interface 21.

Il va de soi que le mode de réalisation qui a été décrit ci-dessus a été donné à titre purement indicatif et nullement limitatif, et que de nombreuses modifications peuvent être facilement apportées par l'homme de l'art sans pour autant sortir du cadre de l'invention.

Ainsi par exemple, la fonction bijective précitée pourrait contenir deux paramètres x et y au lieu d'un seul, de façon à s'exprimer en fonction d'une part, de l'indication temporelle de dépôt du message vocal, et, d'autre part, de l'identification de l'utilisateur expéditeur.

Une telle fonction s'exprimerait par exemple de la façon suivante:
F(x,y)=1000x+y où x ∈ A=N ensemble des entiers naturels et y ∈ B, avec B=N ∩ [0,99].

Certaines autres informations du message vocal déposé peuvent également être utilisées en tant que paramètres d'entrée de la fonction bijective précitée. De tels autres paramètres son notamment le numéro de compte client de l'utilisateur expéditeur et/ou la durée du message vocal déposé.

## Revendications

1. Procédé d'accès d'un terminal (2) à au moins un message vocal déposé dans un serveur de messagerie (1), ledit procédé comprenant :
- une étape d'envoi au terminal d'une notification de réception (Nr) dudit message vocal déposé, ladite notification contenant des informations relatives à ce dernier,
- une étape d'envoi par le terminal d'une requête (REM) en écoute dudit message vocal déposé auprès du serveur de messagerie,
le procédé étant **caractérisé en ce qu'**il comprend les étapes suivantes:
- préalablement à l'envoi de ladite requête en écoute du message vocal, au niveau du terminal:
* détermination d'un identifiant (IDter) dudit message vocal à partir d'au moins certaines desdites informations contenues dans la notification,
* introduction dudit identifiant déterminé dans ladite requête en écoute de message vocal ;
- suite à l'étape d'envoi par le terminal de ladite requête en écoute de message vocal, au niveau du serveur de messagerie:
* comparaison dudit identifiant reçu à un identifiant (IDserv) qui a été déterminé préalablement à partir desdites certaines informations contenues dans la notification,
* récupération du contenu du message vocal associé audit identifiant déterminé, en cas d'égalité entre les deux identifiants,
* transmission au terminal du contenu (MVn) dudit message vocal récupéré.

2. Procédé selon la revendication 1, dans lequel l'étape de détermination desdits identifiants est effectuée au moyen d'une fonction mathématique bijective connue à la fois du terminal et du serveur de messagerie.

3. Procédé selon la revendication 1, dans lequel lesdites certaines informations contenues dans la notification comprennent une indication temporelle sur le dépôt du message vocal.

4. Procédé selon la revendication 1, dans lequel lesdites certaines informations contenues dans la notification comprennent une indication sur l'identification de l'expéditeur du message vocal déposé.

5. Procédé selon la revendication 1, dans lequel le terminal est du type domestique et la notification de réception de message vocal est du type visuelle.

6. Serveur de messagerie (1) comprenant:
- des moyens de réception (13) d'au moins un message vocal,
- des moyens d'émission (16) pour envoyer à un terminal (2) une notification de réception (Nr) du message vocal reçu, ladite notification contenant des informations relatives audit message vocal,
- des moyens de réception (16) d'une requête (REM) en écoute du message vocal, en provenance du terminal,
ledit serveur étant **caractérisé en ce qu'**il comprend en outre:
- des moyens de calcul (141) pour déterminer un identifiant (IDserv) dudit message vocal reçu, à partir de certaines des informations contenues dans la notification,
- des moyens de traitement (143) pour comparer ledit identifiant déterminé à un identifiant (IDter) contenu dans ladite requête en écoute de message vocal reçue,
- des moyens (144) de récupération du contenu du message vocal associé audit identifiant déterminé, en cas d'égalité entre les deux identifiants,
- des moyens (16) de transmission au terminal du contenu (MVn) dudit message vocal récupéré.

7. Terminal (2) comprenant :
- des moyens (22) de réception d'une notification de réception (Nr) de message vocal, ladite notification comprenant des informations relatives audit message vocal,
- des moyens d'émission (22) pour envoyer une requête (REM) en écoute dudit message vocal auprès d'un serveur de messagerie, ledit terminal étant **caractérisé en ce qu'**il comprend:
- des moyens de calcul (242) pour déterminer un identifiant (IDter) dudit message vocal à partir de certaines desdites informations contenues dans ladite notification ;
- des moyens (21) d'introduction dudit identifiant déterminé dans ladite requête en écoute de message vocal.

8. Système d'accès à au moins un message vocal déposé dans un serveur de messagerie selon la revendication 6, à partir d'un terminal selon la revendication 7.

9. Programme d'ordinateur comportant des instructions pour l'exécution des étapes du procédé d'accès selon la revendication 1, lorsque ledit programme est exécuté par un ordinateur.

10. Support d'enregistrement lisible par un ordinateur sur lequel est enregistré un programme d'ordinateur comprenant des instructions pour l'exécution des étapes du procédé d'accès selon la revendication 1, lorsque ledit programme est exécuté par un ordinateur.
